# FASCICULE DE BREVET EUROPEEN

(11) **EP 0 500 166 B1**
(45) Date de publication et mention de la délivrance du brevet: **19.07.1995**
(21) Numéro de dépôt: 92200368.6
(22) Date de dépôt: 11.02.1992
(51) Int. Cl.: B29C 49/46

(54) **Procédé pour réaliser, par moulage par soufflage, des corps creux en matière thermoplastique présentant une imperméabilité aux gaz améliorée**
Blasverfahren zum Herstellen von Hohlkörpern aus thermoplastischem Material mit verbesserter Gasdichtheit
Method to obtain, by blow molding, hollow thermoplastic bodies with an improved gas impermeability

(30) Priorité: 20.02.1991 BE 9100167
(43) Date de publication de la demande: 26.08.1992
(73) Titulaire: SOLVAY (Société Anonyme), B-1050 Bruxelles (BE)
(72) Inventeur: Masson, Didier, B-1020 Bruxelles (BE); Obsomer, Marc, B-1060 Bruxelles (BE)
(74) Mandataire: Dufrasne, Eugène

(56) Documents cités:
- EP-A- 0 039 929
- EP-A- 0 063 378
- EP-A- 0 176 044
- EP-A- 0 210 344
- EP-A- 0 266 439

## Description

La présente invention concerne un procédé pour réaliser, par moulage par soufflage, des corps creux en matière thermoplastique, tels que notamment des réservoirs à carburant pour véhicules automobiles, présentant une imperméabilité aux gaz améliorée.

Parmi les techniques utilisables pour accroître l'imperméabilité aux gaz de ces types de corps creux en matière thermoplastique, celle faisant appel à un traitement superficiel au moyen d'un gaz réactif tel que notamment du fluor est actuellement largement utilisée en particulier lorsque ces corps creux sont produits à partir de polyoléfines telles que notamment le polyéthylène.

Le traitement superficiel au moyen d'un gaz réactif et notamment au moyen de fluor peut toutefois se révéler coûteux compte tenu du prix du gaz réactif.

Ainsi, lors d'un traitement par fluoration, seule une faible proportion du fluor introduit réagit avec la surface de l'article à traiter et le reste est évacué par rinçage avec les gaz de soufflage et se retrouve piégé et donc perdu dans une tour de lavage.

Par ailleurs, la sévérité croissante des normes de perméabilité imposées par les utilisateurs ainsi que l'introduction de carburants mixtes, contenant des composés oxygénés tels que du méthanol, exigent des traitements de plus en plus énergiques impliquant notamment un brassage forcé du gaz de traitement qui est généralement obtenu par une succession d'injections et de détentes du gaz de traitement dans l'article à traiter. Il va sans dire que le recours à ce type de traitement entraîne un accroissement important des pertes en gaz de traitement.

Tenant compte de ces considérations, un procédé de traitement par fluoration ne peut donc se révéler économiquement intéressant que dans la mesure où il pourrait permettre une récupération et un recyclage aussi poussés que possible du gaz de réaction.

Dans le brevet européen 0039929, on a déjà proposé un procédé de fluoration de corps creux en matières plastiques qui permet une certaine récupération du gaz de réaction. Selon ce procédé, la fraction de tête du gaz de réaction entraînée par le gaz inerte de rinçage est récupérée dans une enceinte et réutilisée lors d'un cycle de fluoration ultérieur.

Ce procédé comporte toutefois les limitations suivantes :
- le gaz inerte de rinçage dilue inévitablement le gaz de réaction récupéré et le rendement de la récupération est de ce fait limité surtout si le rinçage est effectué sous un débit continu qui conduit à des défauts d'homogénéité importants du mélange.
- la consommation en gaz réactif étant proportionnelle à la pression de traitement, la quantité non récupérée reste toujours une fraction fixe de la quantité injectée dans l'article traité.
- dans le cas du recours à une série de cycles d'injection-détente le procédé ne peut pratiquement réaliser la récupération que sur le dernier cycle.

Le procédé selon la présente invention a, dès lors, pour objet de remédier à ces inconvénients et de fournir, en outre, de nombreux avantages qui seront détaillés dans la description qui va suivre.

L'invention concerne, dès lors, un procédé pour réaliser, par moulage par soufflage, des corps creux en matière thermoplastique présentant une imperméabilité aux gaz améliorée par traitement de leur surface interne par un gaz réactif en un cycle d'opérations successives impliquant :
a) l'emprisonnement d'une portion de paraison extrudée d'une matière thermoplastique dans un moule de soufflage,
b) l'injection dans la préforme emprisonnée d'un mélange sous pression de gaz inerte et de gaz réactif provenant d'un cycle antérieur stocké dans une enceinte sous pression, et ce sous une pression permettant le moulage du corps creux désiré, qui se caractérise en ce qu'il comprend en outre :
c) l'injection dans le corps creux ainsi moulé d'un complément de gaz réactif pour accroître sa teneur dans le mélange sous pression,
d) le maintien du mélange enrichi dans le corps creux durant un laps de temps suffisant pour assurer le traitement de la paroi interne du corps creux moulé,
e) la détente du mélange enrichi et la récupération de celui-ci dans une enceinte fermée,
f) le transfert sous compression du mélange de gaz détendu de l'enceinte fermée vers l'enceinte de stockage sous pression en vue de son utilisation dans l'étape b d'un cycle de production ultérieur,
g) l'injection dans le corps creux d'un gaz inerte de balayage qui est évacué, les opérations f et g pouvant être effectuées simultanément.

En géneral, le gaz de balayage est, de préférence, évacué vers l'atmosphère via une installation de neutralisation du gaz réactif résiduel entraîné du corps creux par le gaz inerte de balayage.

Dans le procédé conforme à l'invention, le gaz réactif mis en oeuvre est, de préférence, du fluor.

Dans le procédé conforme à l'invention, il se révèle avantageux, afin de profiter du bénéfice d'une série de cycles d'injection-soufflage et du brassage résultant, de répéter, au moins une fois, entre les opérations e et g, les opérations b, c, d, e et f, les opérations c et f pouvant être omises. Dans le cas où l'on recourt à cette possibilité offerte par le procédé, l'opération c, d'injection d'un complément de gaz réactif, peut être retardée et n'intervenir qu'au cours d'un ou plusieurs des cycles successifs d'injection-soufflage.

En outre, dans le procédé conforme à l'invention, il est loisible, entre les opérations a et b de procéder au moulage par soufflage du corps creux par injection d'un gaz inerte sous pression dans la portion de paraison emprisonnée et, après ce moulage, de procéder à la détente et à l'évacuation du gaz inerte du corps creux moulé. Dans ce cas, la suite des opérations du procédé selon l'invention reste inchangée mis à part le fait que dans l'opération b le mélange sous pression de gaz inerte et de gaz réactif est cette fois injecté dans le corps creux déjà moulé et ne participe donc plus à son moulage.

L'injection du gaz inerte de balayage peut être réalisée en continu ou préférentiellement par une série de cycles de compression-détente ce qui permet de mieux diluer encore le gaz réactif résiduel.

Enfin, tenant compte du fait que la présence d'oxygène dans le corps creux moulé nuit, en particulier, à l'efficacité du traitement lorsque le gaz réactif utilisé est du fluor, il peut être avantageux lors de l'extrusion de la paraison d'éliminer au maximum possible l'air contenu dans celle-ci par un balayage interne au moyen d'un gaz inerte.

Le gaz inerte utilisé dans les différents stades du procédé selon l'invention peut être un gaz inerte quelconque, l'azote étant généralement préféré pour des raisons économiques.

Le procédé conforme à l'invention permet d'éviter une dilution progressive du gaz réactif dans le mélange réactif récupéré et recyclé du fait notamment que le gaz réactif consommé par un traitement précédent est compensé lors du traitement suivant par un ajout, dosé à cet effet, de gaz réactif lors de l'opération c.

Par ailleurs, dans le procédé selon l'invention, le recyclage du gaz réactif rend la consommation en gaz réactif non effectif totalement indépendante de la pression imposée lors du traitement et permet donc un traitement à pression plus élevée avec pour avantages une meilleure qualité du traitement d'imperméabilisation et une meilleure qualité dimensionnelle du corps creux fini.

En outre, dans le procédé selon l'invention, la consommation déjà réduite en gaz réactif non effectif reste inchangée si l'on recourt à une série de cycles d'injection-détente et ce à la quantité près de fluor fixé sur la surface interne du corps creux puisque cette série de cycle est effectuée en circuit fermé et sans aucun rejet. Le procédé permet donc un brassage du gaz réactif qui entraîne un accroissement de l'efficacité du traitement d'imperméabilisation sans aucun accroissement sensible du coût matière.

Enfin, la diminution de la consommation ineffective en gaz réactif réduit également les coûts associés à la station d'épuration avant rejet à l'atmosphère et participe à la protection de l'environnement.

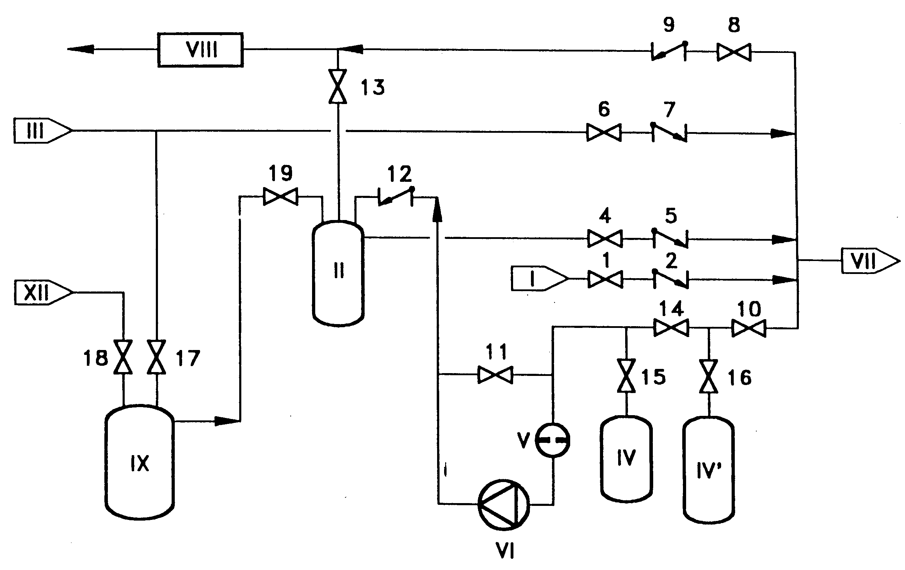

Le procédé conforme à l'invention et les avantages qui en découlent sont, en outre, explicités plus en détail dans la description qui va suivre d'un mode préféré de réalisation et dans lequel on utilise une installation schématisée dans la figure unique du dessin annexé.

Cette installation comprend essentiellement :
- une arrivée d'azote pur (I) commandée par une vanne (1) et un clapet (2),
- une enceinte fermée de stockage (II) destinée à contenir un mélange sous pression d'azote et de fluor gazeux récupéré d'une opération antérieure de fluoration et équipée d'une vanne (4) et d'un clapet (5),
- une arrivée (III) de fluor à haute concentration (5 à 100 %) commandée par une vanne (6) et un clapet (7),
- une évacuation vers une tour de lavage (VIII) en relation avec l'atmosphère et commandée par une vanne (8) et par un clapet (9),
- une enceinte fermée de récupération (IV) équipée d'une vanne (10),
- une seconde enceinte fermée de récupération (IV') associée à des vannes (14), (15) et (16), cette seconde enceinte et les vannes associées étant optionnelles.
- un filtre (V) et un compresseur (VI) équipé d'un by-pass (11) pouvant refouler sous pression le contenu des enceintes (IV) et (IV') vers l'enceinte fermée (II) via une vanne (12).

Les différents éléments détaillés ci-avant sont reliés entre eux par des canalisations et peuvent être mis en relation via les diverses vannes et clapets avec le corps creux à traiter (VII) enfermé dans son moule de soufflage non représenté.

### Exemple

En se référant à la figure annexée le procédé selon l'invention implique les opérations successives suivantes :
a. Emprisonnement d'une portion de paraison extrudée d'une matière thermoplastique dans le moule.
b. Injection dans la préforme emprisonnée d'un mélange sous pression d'azote et de fluor contenu dans l'enceinte fermée (II) et récupéré d'un traitement de fluoration antérieur. Cette injection est obtenue par l'ouverture de la vanne (4), la vanne (8) étant entretemps fermée. Elle est réalisée sous une pression permettant le moulage du corps creux (VII) désiré.
c. Injection dans le corps creux (VII) d'un complément de fluor (déterminée de façon à compenser la consommation en fluor du cycle de fluoration précédent), après fermeture de la vanne (8), cette injection étant obtenue par l'ouverture temporaire de la vanne (6).
d. Maintien du mélange enrichi dans le corps creux (VII) pour assurer la fluoration de sa paroi interne.
e. Détente du mélange gazeux contenu dans le corps creux (VII) par ouverture des vannes (10), (14), (15) et (16), le mélange détendu étant récupéré dans les enceintes fermées (IV) et (IV').
f. Recyclage du mélange gazeux par tranfert de celui-ci des enceintes fermées (IV) et (IV') vers l'enceinte fermée de stockage (II) grâce à l'intervention du compresseur (VI) et via la vanne (12) et le filtre (V). Durant cette opération, la vanne (10) peut être fermée.
g. Balayage interne du corps creux (VII) par de l'azote via l'ouverture de la vanne (1) et évacuation du gaz résiduel extrait du corps creux (VII) vers la tour de lavage (VIII) par l'ouverture de la vanne (8). Ce balayage est, de préférence, effectué en même temps que l'opération de recyclage précédente.

Afin d'augmenter l'efficacité du traitement de fluoration, il est avantageux d'effectuer plusieurs cycles successifs de fluoration. A cet effet, après l'opération f ci-avant et sans procéder à l'opération g de balayage, on peut procéder à une ou plusieurs nouvelle(s) injection(s) successives de mélange gazeux dans le corps creux (VII) suivie(s) d'une détente et d'une récupération selon les points d, e et f ci-avant. Dans ce cas, il n'est pas nécessaire mais possible de procéder à de nouveaux apports de fluor dans le mélange gazeux de traitement puisque ce dernier circule en circuit fermé. Il apparaît, dès lors, que si l'on effectue une pluralité de cycles de fluoration, la consommation en fluor est réduite à la quantité de fluor de complément injectée lors du premier traitement et qui compense, en fait, la consommation du cycle de fluoration du corps creux traité précédemment.

La seconde enceinte de récupération (IV') présente dans l'installation telle qu'illustrée a, en fait, pour fonction de permettre une accélération de la phase de récupération qui est, en fait, une étape peu utile pour la fluoration et pénalisante pour la cadence de production (il apparaît en fait que le débit du compresseur tombe fortement lorsque la pression à l'aspiration chute). La récupération finale s'opère dans ce cas particulier en trois phases :
- Le corps creux (VII) est mis en communication avec l'enceinte (IV) via les vannes (10), (14) et (15), la vanne (16) étant fermée (dans ce cas la pression atteinte à l'équilibre reste élevée car l'enceinte (IV) n'a pu être vidée suffisamment suite aux récupérations multiples),
- Le corps creux (VII) est mis seul en communication avec l'entrée du compresseur par les vannes (10) et (14), les vannes (15) et (16) étant fermées, la pression d'aspiration garantissant encore un débit correct,
- Lorsque la pression dans le corps creux (VII) atteint une valeur telle que le débit du compresseur devient trop faible, celui-ci est mis en communication par les vannes (10) et (16) avec la seconde enceinte (IV') qui est conservée durant toute la fluoration à une pression basse.

Dans le procédé selon l'invention, le traitement de fluoration est effectué grâce à l'intervention d'un mélange gazeux récupéré d'un traitement de fluoration antérieur et, dès lors, le problème du démarrage d'un traitement de fluoration exige le préremplissage de l'enceinte fermée de stockage (II) au moyen d'un mélange gazeux de départ. A cet effet, l'installation telle que représentée dans la figure du dessin annexé comporte, en outre, une enceinte fermée (IX) raccordée à des sources d'azote (III) et de fluor (XII) par des vannes (17) et (18) permettant la réalisation d'un mélange équilibré qui peut être transféré, lors d'un démarrage, dans l'enceinte fermée de stockage (II) via la vanne (19). Pour des mesures de sécurité, l'enceinte fermée de stockage (II) peut avantageusement être, en outre, reliée directement à la tour de lavage (VIII) via une vanne (13). Cette vanne (13) permet notamment une vidange rapide des enceintes (IX) et (II), via la tour de lavage (VIII), en cas de nécessité ou en cas de dépassement de la pression maximum fixée pour l'enceinte (II).

La régulation du procédé tel que décrit peut avantageusement être contrôlée par temporisation, les mesures de pressions servant, d'une part, à régler ces temporisations pour chaque type de corps creux à traiter et, d'autre part, à vérifier le bon fonctionnement du procédé.

En variante du procédé tel que décrit on peut envisager :
- de réaliser le moulage par soufflage du corps creux désiré au moyen d'un gaz inerte contenant une faible proportion de gaz réactif, cette façon de procéder ayant l'avantage d'exercer une fluoration progressive qui protège les liaisons carbone-carbone de matériau constitutif du corps creux traité contre l'exothermicité de la réaction de fluoration.
- de réaliser le moulage par soufflage du corps creux au moyen d'un gaz inerte, d'effectuer ensuite une introduction de gaz réactif sous faible concentration (pour limiter la consommation et obtenir une fluoration progressive comme indiquée ci-avant) et de détendre ce gaz vers la tour de lavage avant introduction du gaz réactif recyclé.
- de réaliser entre les opérations a et b, le moulage par soufflage du corps creux (VII) par injection d'un gaz inerte sous pression dans la portion de paraison emprisonnée. Après moulage, on détend le gaz de soufflage enfermé dans le corps creux (VII) par l'ouverture de la vanne (8). La dilution du fluor ultérieurement introduit dans le corps creux (VII) étant influencée par la quantité de gaz de soufflage résiduelle contenue dans ce corps creux, il convient d'effectuer une détente du gaz de soufflage aussi complète que possible et compatible avec un maintien du contact entre le moule et l'objet moulé. De préférence, la détente est conduite de façon que la pression dans le corps creux (VII) soit comprise entre 1 et 2 bars, et de préférence, entre 1 et 1,2 bars.
   Lors de l'opération b, le mélange sous pression d'azote et de fluor est injecté dans le corps creux (VII) déjà moulé.

Dans le cas, où le moulage par soufflage du corps creux est obtenu à l'intervention d'un gaz inerte, ce moulage par soufflage peut avantageusement être réalisé par une pluralité de cycles d'injection-détente de gaz inerte. En procédant de cette façon, on élimine l'oxygène et les oligomères éventuellement présents dans la paraison de départ.

Dans la description qui précède, on n'a envisagé que l'utilisation du fluor en tant que gaz réactif, mais il est bien entendu que le procédé tel que revendiqué reste d'application lors d'un traitement au moyen d'autres gaz réactifs et, en particulier, lors d'un traitement de sulfonation. De même, il est bien entendu que le procédé tel que décrit peut s'appliquer à tout corps creux réalisé en une matière thermoplastique quelconque.

## Revendications

1. Procédé pour réaliser, par moulage par soufflage, des corps creux en matière thermoplastique présentant une imperméabilité aux gaz améliorée par traitement de leur surface interne par un gaz réactif en un cycle d'opérations successives impliquant :
a) l'emprisonnement d'une portion de paraison extrudée d'une matière thermoplastique dans un moule de soufflage,
b) l'injection dans la préforme emprisonnée d'un mélange sous pression de gaz inerte et de gaz réactif provenant d'un cycle antérieur stocké dans une enceinte sous pression (II), et ce sous une pression permettant le moulage du corps creux (VII) désiré,
caractérisé en ce qu'il comprend en outre
c) l'injection dans le corps creux (VII) ainsi moulé d'un complément de gaz réactif pour accroître sa teneur dans le mélange sous pression,
d) le maintien du mélange enrichi dans le corps creux (VII) durant un laps de temps suffisant pour assurer le traitement de la paroi interne du corps creux moulé,
e) la détente du mélange enrichi et la récupération de celui-ci dans une enceinte fermée (IV),
f) le transfert sous compression du mélange de gaz détendu de l'enceinte fermée (IV) vers l'enceinte de stockage sous pression (II) en vue de son utilisation dans l'étape b d'un cycle de production ultérieur
g) l'injection dans le corps creux (VII) d'un gaz inerte de balayage qui est évacué, les opérations f et g pouvant être effectuées simultanément.

2. Procédé selon la revendication 1 caractérisé en ce que le gaz réactif est du fluor.

3. Procédé selon la revendication 1 ou 2 caractérisé en ce que le gaz inerte de balayage est évacué vers l'atmosphère via une installation de neutralisation (VIII) du gaz réactif résiduel entraîné du corps creux (VII) par le gaz inerte de balayage

4. Procédé selon l'une quelconque des revendications 1 à 3 caractérisé en ce que entre les opérations e et g on répète, au moins une fois, les opérations b, c, d, e et f, les opérations c et f pouvant être éventuellement omises.

5. Procédé selon l'une quelconque des revendications précédentes caractérisé en ce que, entre les opérations a et b, on réalise le moulage par soufflage du corps creux (VII) par injection d'un gaz inerte sous pression dans la portion de paraison emprisonnée et, après moulage, on détend et évacue le gaz inerte du corps creux (VII), les opérations successives suivantes étant inchangées mis à part le fait que dans l'opération b le mélange sous pression de gaz inerte et de gaz réactif est injecté dans le corps creux (VII) moulé.

6. Procédé selon l'une quelconque des revendications précédentes caractérisé en ce que l'air contenu dans la paraison extrudée est éliminé par un balayage interne au moyen d'un gaz inerte durant sa production.

7. Procédé selon l'une quelconque des revendications précédentes caractérisé en ce que le gaz inerte utilisé dans tout stade du procédé est de l'azote.

8. Procédé selon l'une quelconque des revendications précédentes caractérisé en ce que le moulage du corps creux (VII) est réalisé par une pluralité de cycles d'injection-détente de gaz inerte.

9. Procédé selon l'une quelconque des revendications précédentes caractérisé en ce que le gaz inerte utilisé pour réaliser le soufflage du corps creux contient une faible proportion de gaz réactif.

## Claims

1. Process for producing, by blow moulding, hollow bodies made of thermoplastic material having an improved impermeability to gases by treating their internal surface by a reactive gas in a cycle of successive operations which involves :
a) capturing a portion of an extruded parison of a thermoplastic material in a blowing mould,
b) injecting, into the captured preform, a pressurised mixture of inert gas and of reactive gas coming from a prior cycle stored in a pressurised enclosure (II), and this is done under a pressure permitting the moulding of the desired hollow body (VII), characterised in that it further comprises
c) injecting, into the hollow body (VII) thus moulded, an addition of reactive gas in order to increase its content in the pressurised mixture,
d) maintaining the enriched mixture in the hollow body (VII) during a period of time sufficient for treating the internal wall of the moulded hollow body,
e) expanding the enriched mixture and recovering the latter in a sealed enclosure (IV),
f) transferring the expanded gas mixture under compression from the sealed enclosure (IV) to the pressurised storage enclosure (II) with a view to its use in step b of a subsequent production cycle
g) injecting, into the hollow body (VII), an inert scavenging gas which is carried away, it being possible for the operations f and g to be carried out simultaneously.

2. Process according to Claim 1, characterised in that the reactive gas is fluorine.

3. Process according to Claims 1 or 2, characterised in that the inert scavenging gas is carried away to the atmosphere via an installation (VIII) for neutralising the entrained residual reactive gas of the hollow body (VII) by the inert scavenging gas.

4. Process according to any one of Claims 1 to 3, characterised in that between the operations e and g, the operations b, c, d, e and f are repeated, at least once, it being possible for the operations c and f to be optionally omitted.

5. Process according to any one of the preceding claims, characterised in that, between the operations a and b, the blow moulding of the hollow body (VII) is carried out by injection of pressurised inert gas into the captured parison portion and, after moulding, the inert gas in expanded and carried away from the hollow body (VII), the following successive operations being unchanged apart from the fact that, in the operation b, the pressurised mixture of inert gas and reactive gas is injected into the moulded hollow body (VII).

6. Process according to any one of the preceding claims, characterised in that the air contained in the extruded parison is removed by an internal scavenging by means of an inert gas during its production.

7. Process according to any one of the preceding claims, characterised in that the inert gas used in each stage of the process is nitrogen.

8. Process according to any one of the preceding claims, characterised in that the moulding of the hollow body (VII) is carried out by a plurality of inert gas injection-expansion cycles.

9. Process according to any one of the preceding claims, characterised in that the inert gas used for carrying out the blowing of the hollow body contains a small proportion of reaction gas.

## Patentansprüche

1. Verfahren zur Herstellung von Hohlkörpern aus thermoplastischem Kunststoff durch Blasformen, welche durch Behandlung ihrer inneren Oberfläche mit einem reaktiven Gas in einem Zyklus von aufeinanderfolgenden Arbeitsgängen eine verbesserte Gasdichtigkeit aufweisen, umfassend:
a) das Einschließen einer Teilmenge einer aus einem thermoplastischen Kunststoff extrudierten Masse in einer Blasform,
b) die Injektion eines aus einem vorangehenden Zyklus stammenden, unter Druck stehenden Gemischs von inertem Gas und reaktivem Gas, das in einem unter Druck stehenden Behälter (II) gespeichert ist, in den eingeschlossenen Vorformling, und dies unter einem Druck, der das Formen des gewünschten Hohlkörpers (VII) gestattet, dadurch gekennzeichnet, daß es ferner umfaßt
c) die Injektion einer Zugabe von reaktivem Gas in den derart geformten Hohlkörper (VII), um seinen Anteil in dem unter Druck stehenden Gemisch zu vergrößern,
d) das Halten des angereicherten Gemischs im Hohlkörper (VII) während einer Zeitspanne, die ausreicht, um die Behandlung der Innenwand des geformten Hohlkörpers sicherzustellen,
e) die Entspannung des angereicherten Gemischs und die Rückgewinnung desselben in einem geschlossenen Behälter (IV),
f) das Überführen des entspannten Gasgemischs unter Verdichtung aus dem geschlossenen Behälter (IV) zum unter Druck stehenden Speicherbehälter (II) im Hinblick auf seine Verwendung im Schritt b eines späteren Fertigungszyklus,
g) die Injektion eines inerten Spülgases in den Hohlkörper (VII), welches abgeführt wird, wobei die Arbeitsgänge f und g gleichzeitig ausgeführt werden können.

2. Verfahren nach Anspruch 1, dadurch gekennzeichnet, daß das reaktive Gas Fluor ist.

3. Verfahren nach Anspruch 1 oder 2, dadurch gekennzeichnet, daß das inerte Spülgas über eine Neutralisationseinrichtung (VIII) für das vom inerten Spülgas aus dem Kohlkörper (VII) mitgeführte restliche reaktive Gas zur Atmosphäre abgeführt wird.

4. Verfahren nach einem beliebigen der Ansprüche 1 bis 3, dadurch gekennzeichnet, daß man zwischen den Arbeitsgängen e und g mindestens einmal die Arbeitsgänge b, c, d, e und f wiederholt, wobei die Arbeitsgänge c und f gegebenenfalls weggelassen werden können.

5. Verfahren nach einem beliebigen der vorangehenden Ansprüche, dadurch gekennzeichnet, daß man zwischen den Arbeitsgängen a und b das Blasformen des Hohlkörpers (VII) durch Injektion eines unter Druck stehenden inerten Gases in die eingeschlossene Teilmenge der Masse ausführt, und daß man nach dem Formen das inerte Gas entspannt und aus dem Hohlkörper (VII) abführt, wobei die nachfolgenden aufeinanderfolgenden Arbeitsgänge unverändert sind, abgesehen von der Tatsache, daß beim Arbeitsgang b das unter Druck stehende Gemisch von inertem Gas und reaktivem Gas in den geformten Hohlkörper (VII) injiziert wird.

6. Verfahren nach einem beliebigen der vorangehenden Ansprüche, dadurch gekennzeichnet, daß daß die in der extrudierten Masse enthaltene Luft durch eine innere Spülung mit Hilfe eines inerten Gases während ihrer Erzeugung beseitigt wird.

7. Verfahren nach einem beliebigen der vorangehenden Ansprüche, dadurch gekennzeichnet, daß das in jedem Stadium des Verfahrens verwendete inerte Gas Stickstoff ist.

8. Verfahren nach einem beliebigen der vorangehenden Ansprüche, dadurch gekennzeichnet, daß das Formen des Hohlkörpers (VII) durch eine Mehrzahl von Zyklen einer Injektion/Entspannung von inertem Gas ausgeführt wird.

9. Verfahren nach einem beliebigen der vorangehenden Ansprüche, dadurch gekennzeichnet, daß das zur Durchführung des Blasens des Hohlkörpers verwendete inerte Gas einen geringen Gehalt an reaktivem Gas enthält.
